# EUROPEAN PATENT SPECIFICATION

(11) **EP 0 794 246 B1**
(45) Date of publication and mention of the grant of the patent: **23.10.2002**
(21) Application number: 97200678.7
(22) Date of filing: 10.03.1997
(51) Int. Cl.: C12F 3/10, C05D 1/02, C05F 5/00, A23K 1/02

(54) **Process for recovering valuable compounds from vinasse produced during fermentation**
Verfahren zur Rückgewinnung von Wertstoffen aus Gärungsschlempe
Procédé pour la récupération de composés de valeur à partir de vinasses de fermentation

(30) Priority: 08.03.1996 EP 96200596; 14.03.1996 EP 96200708
(43) Date of publication of application: 10.09.1997
(73) Proprietor: DSM N.V., 6411 TE Heerlen (NL)
(72) Inventor: Hamstra, Reinder Sietze, 2641 LH Pijnacker (NL); Schoppink, Peter Johannes, 1075 XJ Amsterdam (NL)
(74) Representative: Matulewicz, Emil Rudolf Antonius, Dr.

(56) References cited:
- WO-A-96/00776
- FR-A- 1 377 487
- FR-A- 1 497 480
- FR-A- 2 573 088
- US-A- 4 781 928

## Description

The present invention relates to a process for the fractioning and recovery of valuable compounds from vinasse produced in fermentations.

Molasse, e.g. beet molasse, is generally used in fermentation industries for the production of e.g. baker's yeast, alcohol and citric acid, amino acids and antibiotics. The residue after fermentation is generally concentrated by evaporation or distillation and the concentrate is generally referred to as 'vinasse' or condensed molasse solubles. This vinasse is used as fertilizer or, if the potassium content is reduced to acceptable levels, as feed ingredient.

In recent years an additional possibility has been investigated viz. the feasibility of isolating valuable components, especially betaine. Examples hereof are disclosed in US-A-4,359,430 and 5,127,957.

In these processes to recover these valuable compounds from fermentation waste water, chromatographic separation is the preferred purification step.

The critical step in this operation is the elimination of suspended solids (yeast cells, yeast debris and other particulate matter) from the feed stream before reaching the chromatographic separator.

For the treatment of stillage obtained from alcohol fermentations (EP-A-411780), microfiltration is described as the clarification step. The microfiltration of concentrated vinasse (>50% dry solids) is not feasible due to low fluxes, low yield and membrane fouling and therefore clarification has to be conducted using a relatively dilute stream, and so subsequent chromatography has to process large volumes, making this process unattractive.

Another disadvantage of the microfiltration is the high associated investment because fluxes are usually small and operation and maintenance is costly.

Another example of the clarification of fermentation waste water is given in WO 96/00775. Here dilute vinasse is clarified by passing it through a high efficiency centrifuge. The clarified, dilute vinasse is concentrated by evaporation (50-80% dry solids). During evaporation potassium salts/crystals are formed which can be separated from the vinasse by decantation, filtration or a combination of these processes.

A drawback of the process described in WO 96/00775 is the formation of precipitates (which is irreversible) during evaporation of the vinasse, which makes a second clarification after decantation of the potassium salt crystals necessary. In addition, the crystallization of potassium salts remains uncontrollable, giving rise to heterogenous crystal growth and size and consequently troublesome solid/liquid separation of the crystal fraction. These problems were not completely solved by the addition of an acid such as sulphuric acid.

FR-A-1 337 487 discloses a process for recovering potassium salts from vinasse which comprises concentration of the fermentation waste, addition of ammonium sulphate to the concentrated waste, and separation of the potassium-containing crystals to give a supernatant. In order to obtain large crystals which are easier to remove from the crystallization solution, ammonium sulphate is added during the concentration step. FR-A-1 497 480 discloses a process for recovering potassium salts from vinasse, in which ammonium sulphate is added after completion of the concentration stage. FR-A-2 573 088 discloses a process for recovering potassium salts from vinasse which comprises a first acidification step of the vinasse by addition of H₂SO₄ followed by a neutralization step by addition of NH₃.

According to the present invention a process is disclosed for clarifying and/or reducing the potassium concentration of fermentation waste liquid before it is subjected to chromatography or other separation techniques.

Furthermore, the present invention can provide a significantly greater degree of control over potassium salt crystallization, and clarification is possible in one single clarification step in contrast to the two steps required in WO 96/00775.

The present invention thus provides a process for the treatment of a liquid fermentation waste (such as vinasse) which contains potassium, the process comprising:
(a) adding ammonium sulphate to the fermentation waste; and
(b) concentrating the fermentation waste (eg. vinasse) to a dry matter content of from 50 to 80% dry solids; and
(c) separating potassium-containing crystals formed in concentration stage (b) to give a supernatant

Preferred embodiments of the invention are defined in dependent claims 2-8.

Preferably the potassium content in the resulting supernatant is lower than 3.5% w/w. Also preferably other suspended solids are removed in the separation step: in this way the sediment in the supernatant may be reduced to less than 4% w/w.

At the end of fermentation, the yeast can be separated by conventional solid/liquid separation and the residual waste water and washing water is collected. Together they form the waste stream which often contains a number of highly valuable compounds, albeit at relatively low concentrations.

An effective amount of ammonium sulphate is added to the liquid fermentation waste (such as the waste stream) before concentration (such as by evaporation). Suitably 2 to 25 g of ammonium sulphate, preferably 5 to 10 g of ammonium sulphate, is added per litre of (liquid fermentation) waste (which may have a dry matter content of about 5%).

The amount of the NH₄SO₄ added will in general depend on the concentration of the potassium in the liquid fermentation waste (waste stream). In other fermentation wastes having a different DS (dry solids) content, the amount of ammonium sulphate can be increased or decreased in proportion to the amount of potassium and/or sulfate already present. The liquid fermentation waste stream (usually the remainder after fermentation) can be concentrated by evaporation, preferably by a multi-effect evaporator to a dry matter content of from 50 to 85% DS (dry solids), optimally from 65 to 78% DS.

During concentration (evaporation) the potassium salts can crystallize in a controlled manner (homogeneous crystal growth). The crystal fraction can then be separated from the supernatant (or concentrate) by a conventional solid/liquid separation technique like decantation or centrifugation.

The (emerging potassium salt) crystal fraction can be stabilized and used as a fertilizer or fertilizer ingredient. Advantageously the potassium salt fraction is stabilized to prevent sedimentation by a viscosity regulating agent. Preferably a gum is used, such as xanthane gum. Suitably 0.01 to 1% (w/w), preferably 0.025 to 0.1% (w/w), of xanthane gum is added to the potassium salt fraction. The addition of the viscosity regulating agent can improve the pumpability of the suspension. We have found that also in prior art processes, in which no ammonium sulphate is added, the separated potassium salt fraction can be stabilized with the use of the viscosity regulating agent according to the invention.

The supernatant (or filtrate) can now be used in animal feeds because of its low potassium concentration.

The supernatant obtained from the vinasse still contains valuable compounds like betaine, PCA (pyrrolidon carbonic acid), succinic acid, citric acid, etc., depending on the raw materials and fermentation process under consideration. These products can be separated by using one or more chromatographic processes. In this case the supernatant is preferably clarified first, the clarification should result in a product being substantially free of particles larger than 5 µm, more preferably 0.5 µm. Clarification can be performed by standard solid-liquid separation processes like microfiltration and filtration.

In the case of standard technique like dead-end filtration, a precoat filtration and/or body feed can result in a high filtration rate and a clarified supernatant suitable as a feed to chromatographic separators. By using this feed in chromatographic separation a fraction which contains substantial amounts of betaine is obtained.

The invention will now be described, without limitation and by way of example only, with reference to the following Examples.

### Example 1

After the fermentation of 'bakers yeast' on a commercial scale, the yeast was recovered by centrifugation and washing. The remainder (dilute vinasse) was collected and ammonium sulphate was added as a 40% saturated solution. The amount added was 10-25 g/l to the dilute vinasse at 5% dry solids.

The dilute vinasse was concentrated by a multi-effect evaporator until a concentrate of 72% dry solids was obtained. At about 40% dry solid content, crystallization started.

The concentrated crystal slurry was decanted by a KHD decantor at 3000 g and a temperature of 80°C. The salt fraction (82% dry solids) was stabilized for unwanted sedimentation by adding 0.05% xanthane gum.

The vinasse after decantation (65% dry solids) was clarified by using a membrane filterpress using Celite super cel as a precoat and body feed (3% w/w).

The clarified vinasse obtained in this manner was subjected to chromatographic separation. Pressure drop, resin capacity and separation characteristics remained constant over a period of 4 weeks.

### Example 2

Diluted vinasse at a concentration of 5 %w was concentrated by a multi-effect evaporator to 60 %w dry matter. After this concentration the temperature is cooled from 60 °C to 20 °C after which the crystallisation was further improved. The concentrated, cooled vinasse is separated with a centrifugal decanter in a salt-stream and a depotassified vinasse. With the addition of 10 kg/m3 ammoniumsulphate to the evaporator feed the potassium content of the vinasse is further lowered as shown in table 1.

**Table 1**

| AMS addition in relation to the K-content of vinasse. | |
|---|---|
| AMS addition (kg/m³) | K⁺ vinasse (%w) |
| 0 | 6.5 - 7.5 |
| 10 | 2.5 - 3.5 |

### Example 3

The depotassified vinasse obtained via the process as described in example 2, with the addition of AMS (ammonium sulphate), has a dry matter content of 53 %w and a betaine concentration of 8.7%w. This vinasse is heated to 85-93 °C, after which it is cleared from suspended solids by various types filtrations.
In tables 2 and 3 the effectiveness of the various filtration processes is presented.

**Table 2 :**

| Clarification by filtration | |
|---|---|
| Type of filtration | Suspended solids (mg/l) |
| No filtration | 4000 - 5000 |
| Microfiltration (200-500 Å Membrane) | 1 - 30 |
| Dead-end filtration | 50 - 70 |
| ∗ 1-2 % bodyfeed | |
| ∗ 0.6-1.1 kg/m² precoat | |

**Table 3 :**

| Clarification by filtration d90 = 90% of particles is smaller. | |
|---|---|
| Type of filtration | Particle size suspended solids d90 (µ) |
| Unfiltrated | 25.0 |
| Cartridge 5µ | 0.2 |
| Putsch-filter | 0.1 |

All clearified vinasses mentioned in tables 2 and 3 were succesfully used in chromatographic separation of betaine.

No fouling was observed with any of the above mentioned filtrates in pilot-runs which were running 20-200 hrs.

### Example 4

The heated vinasse as described in example 3 was cleared with a DE-filtration on a membrane filterpress using 2%w diatomaceous earth as bodyfeed and 1.2 %w diatomaceous earth as precoat. The average flux during filtration was 130 l/m²/hr and the filtrate only contained 6 mg/l suspended solids. The betaine recovery over the filtration step was 88%. The pH of the filtrate was adjusted to 5.5 with sodium hydroxide in order to avoid precipitations. The cleared vinasse was fed to a chromatographic separation column (6" diameter, volume 0.15 m3, resin SM-49, K⁺ form). The temperature was kept on 65 °C. From the column, which was fed with 150 ml/min two streams were obtained. The product was a betaine solution of 140 ml/min, which had a purity of 75%w. For the separation 33 kgs of desorbent water was neccesary per kg of recovered betaine, which lead to a betaine yield of 88%. The separation was continued for 46 hours.

### Example 5

The experiment described in example 4 was repeated, in which the temperature during the chromatographic separation was held at 85 °C. No significant difference was observed in the chromatographic separation.

### Example 6

The cleared vinasse as described in example 4 was again separated on the chromatographic equipment described in example 4. The temperature was kept on 65 °C. From the column, which was fed with 150 ml/min two streams were obtained. The product was a betaine solution of 120 ml/min, which had a purity of 70% w/w. The waste a salt stream. For the separation 25 kgs of desorbent water was used per kg of recovered betaine, which lead to a betaine yield of 92%. The separation was continued for 81 hours.

### Example 7

The obtained vinasse as described in example 3 was heated to 93 °C after which it was cleared by a filtration over a microfilter. The filtration was performed using a 500 Å membrane of 0.2 m2.

With a transmembrane pressure of 1.4 bar and a cross-flow velocity of 5 m/s an average flux of 25 l/m2/hr was obtained. The filtrate had 29 mg/l of suspended solids left.

### Example 8

To the salt-stream obtained by the centrifugal decantation as described in example 2, 0.06 %w of Xanthane-gum (1% solution) is added on weight and 3 % water on weight. This results in a salt-suspension with viscosity of 7000 cP, which is easy pumpable. The thus obtained salt suspension remained stable for more than 6 months.

## Claims

1. A process for the treatment of a liquid fermentation waste which contains potassium, the process comprising:
a) adding ammonium sulphate to the fermentation waste; and
b) concentrating the fermentation waste of step a) to a dry matter content of from 50 to 80% dry solids; and
c) separating the potassium-containing crystals formed in step (b) to give a supernatant;

2. A process according to claim 1, in which evaporation is used for concentrating the fermentation waste and/or centrifugation is used for separating the crystals in step c).

3. A process according to anyone of claim 1 or 2 which further comprises
d) clarifying of the supernatant from step c); and
e) separating betaines, pyrrolidon carbonic acid, succinic acid or citric acid from the clarified supernatant.

4. A process according to claim 3 in which a filtration and/or microfiltration technique is used for the clarification step d) and/or a chromatographic separation technique is used for the separation of betaine or the other compounds in step e).

5. A process according to any of the preceding claims wherein the liquid fermentation waste is vinasse and/or has been treated or purified to remove at least some of the yeast but has not undergone a clarification stage.

6. A process according to any of the preceding claims wherein the ammonium sulphate has been added at an amount of from 2 to 25 g per litre of fermentation waste.

7. A process according to any of the preceding claims wherein crystals are formed in step b) by homogeneous crystal growth.

8. A process according to any of the preceding claims wherein the separated potassium crystal fraction is stabilized with the use of a viscosity regulating agent.

## Patentansprüche

1. Verfahren zum Behandeln eines flüssigen Fermentationsabfallstoffes, der Kalium enthält, mit den Stufen:
a) Zugeben von Ammoniumsulfat zu dem Fermentationsabfallstoff,
b) Konzentrieren des Fermentationsabfallstoffes der Stufe a) bis zu einem Trockenstoffgehalt von 50 bis 80 % an trockenen Feststoffen und
c) Abtrennen der in der Stufe b) gebildeten kaliumhaitigen Kristalle, um einen Überstand zu erhalten.

2. Verfahren nach Anspruch 1, bei dem ein Verdampfen für das Konzentrieren des Fermentationsabfallstoffes und/oder ein Zentrifugieren zum Abtrennen der Kristalle in der Stufe c) angewandt werden.

3. Verfahren nach Anspruch 1 oder 2, das ferner folgende Stufen umfaßt:
d) Klären des Überstands aus der Stufe c) und
e) Abtrennen von Betainen, Pyrrolidoncarbonsäure, Bernsteinsäure oder Citronensäure aus dem geklärten Überstand.

4. Verfahren nach Anspruch 3, bei dem eine Filtrationsund/oder Mikrofiltrationstechnik für die Klärungsstufe d) und/oder eine chromatographische Trennungstechnik zum Abtrennen von Betain oder der anderen Verbindungen in der Stufe e) angewandt werden.

5. Verfahren nach einem der vorstehenden Ansprüche, worin der flüssige Fermentationsabfallstoff Schlempe ist und/oder behandelt oder gereinigt worden ist, um mindestens einen Teil der Hefe abzutrennen, jedoch nicht einer Klärungsstufe unterworfen worden ist.

6. Verfahren nach einem der vorstehenden Ansprüche, worin das Ammoniumsulfat in einer Menge von 2 bis 25 g/l des Fermentationsabfallstoffes zugegeben worden ist.

7. Verfahren nach einem der vorstehenden Ansprüche, worin in der Stufe b) Kristalle durch homogenes Kristallwachstum gebildet werden.

8. Verfahren nach einem der vorstehenden Ansprüche, worin die abgetrennte Kaliumkristallfraktion durch Einsatz eines Viskositätsreglers stabilisiert wird.

## Revendications

1. Procédé pour le traitement de déchets d'une fermentation liquide qui contiennent du potassium, le procédé comprenant :
a) l'addition de sulfate d'ammonium aux déchets de fermentation ; et
b) la concentration de déchets de fermentation de l'étape a) en une teneur en matière sèche de 50 à 80% de matières solides sèches ; et
c) la séparation des cristaux contenant du potassium formés à l'étape b) pour donner un surnageant.

2. Procédé selon la revendication 1, dans lequel l'évaporation est utilisée pour concentrer les déchets de fermentation et/ou la centrifugation est utilisée pour séparer les cristaux à l'étape c).

3. Procédé selon l'une quelconque des revendications 1 ou 2 qui comprend en outre
d) la clarification du surnageant de l'étape c) ; et
e) la séparation de bétaïnes, de pyrrolidone, d'acide carbonique, d'acide succinique ou d'acide citrique du surnageant clarifié.

4. Procédé selon la revendication 3, dans lequel une technique de filtration et/ou de microfiltration est utilisée dans l'étape de clarification d) et/ou une technique de séparation chromatographique est utilisée pour la séparation de bétaïne ou des autres composés de l'étape e).

5. Procédé selon l'une quelconque des revendications précédentes, dans lequel les déchets de fermentation liquide sont des vinasses et/ou ont été traités ou purifiés pour éliminer au moins une partie de la levure mais n'ont pas subi une étape de clarification.

6. Procédé selon l'une quelconque des revendications précédentes, dans lequel le sulfate d'ammonium a été ajouté en une quantité de 2 à 25 g par litre de déchets de fermentation.

7. Procédé selon l'une quelconque des revendications précédentes, dans lequel des cristaux sont formés à l'étape b) par croissance de cristaux homogène.

8. Procédé selon l'une quelconque des revendications précédentes, dans lequel la fraction de cristal de potassium séparé est stabilisée avec l'utilisation d'un agent de régulation de la viscosité.
